Europäisches Patentamt

European Patent Office

Office européen des brevets

(19)

(11) Publication number: **0 116 094**
**B1**

(12) **EUROPEAN PATENT SPECIFICATION**

(45) Date of publication of patent specification: **30.09.87**

(21) Application number: **83902450.2**

(22) Date of filing: **02.08.83**

(86) International application number:
**PCT/JP83/00251**

(87) International publication number:
**WO 84/00612 16.02.84 Gazette 84/05**

(51) Int. Cl.⁴: $G\ 01\ N\ 27/06$

(54) **METHOD FOR MEASURING ACID CONCENTRATION.**

(30) Priority: **02.08.82 JP 133634/82**

(43) Date of publication of application:
**22.08.84 Bulletin 84/34**

(45) Publication of the grant of the patent:
**30.09.87 Bulletin 87/40**

(84) Designated Contracting States:
**FR**

(56) References cited:
**DE-A-1 598 255**
**JP-B-45 013 520**

**No relevant documents have been disclosed THERALD MOELLER (Writer), "Inorganic Chemistry AN ADVANCED TEXTBOOK" (1969) JOHN WILEY & SONS, INC. (New York), P. 361-362**

(73) Proprietor: **MITSUI TOATSU CHEMICALS, INCORPORATED**
**2-5 Kasumigaseki 3-chome**
**Chiyoda-Ku Tokyo 100 (JP)**

(72) Inventor: **KOSHIBE, Minoru**
**3-16, Shinhinoodai, 1-chome**
**Sakai-shi, Osaka 590-01 (JP)**
Inventor: **HAMAMOTO, Toshiharu**
**210-30, Kurotori-cho**
**Izumi-shi, Osaka 594 (JP)**
Inventor: **YAMANO, Nobuyuki**
**8-953, Nishitoriishi 3-chome**
**Takaishi-shi, Osaka 592 (JP)**

(74) Representative: **Lecca, Jean et al**
**CABINET PLASSERAUD 84, rue d'Amsterdam**
**F-75009 Paris (FR)**

## Description

### Technical Field

The present invention relates to a method for measuring acid concentrations.

### Background Art

Acids and alkalis play important roles in various industrial fields. Concentrations of acid or alkali, therefore, are very strictly controlled according to the manner of their uses. There have been proposed and put into practice various analysing methods therefor. The most popular method is the titration method. The titration method has been used for various process control systems because of its high precision and relatively easy use. The titration method, however, presents serious problems in efficiency and safety in process control in fields in which a slight change in acid or alkali concentration greatly affects chemical reactions since it requires relatively long time for analysis.

In DE—A—1 598 255 is generally disclosed a method for determining the concentration of a mixture of electrolytes in a sample having water content, the electric conductivity of the sample being measured and the water content in the sample being calculated by means of a computer calibrated with experimental values of conductivity for known water and electrolyte mixtures.

More specifically this DE—A—1 598 255 discloses a method for determining content of sulfuric acid in a mixture of sulfuric acid and acetic acid in a process for producing cellulose acetate.

But it does not teach that the control of the sulfuric acid concentration during the reaction of decomposing cumene hydroperoxide into phenol and acetone can suppress side reactions and improve yields of phenol and acetone.

### Disclosure of the Invention

An object of the present invention is to provide a method of measuring an acid concentration with high precision in a short time.

More precisely the invention has for an object a method for controlling concentration of sulfuric acid, used as a catalyst in a reaction to obtain phenol and acetone by decomposing cumene hydroperoxide, which comprises the steps of: taking out a sample from the reaction mixture; precisely determining water content in the sample; measuring electric conductivity of the sample; obtaining the sulfuric acid concentration of the sample from the water content determination and electric conductivity measurement, using a correlation, obtained in advance, between sulfuric acid concentration and electric conductivity in relation to water content; and then transmitting the sulfuric acid concentration as a signal to a system for feeding sulfuric acid to the reaction, thereby maintaining the sulfuric acid concentration at a predetermined level.

Preferably:
— the water content determination and the electric conductivity measurement of the determining and the measuring steps respectively are stored in a memory system for obtaining said correlation between the sulfuric acid concentration and electric conductivity in relation to each water content, thereby determining the sulfuric acid concentration;
— the water content determination is conducted by an optically measuring method.

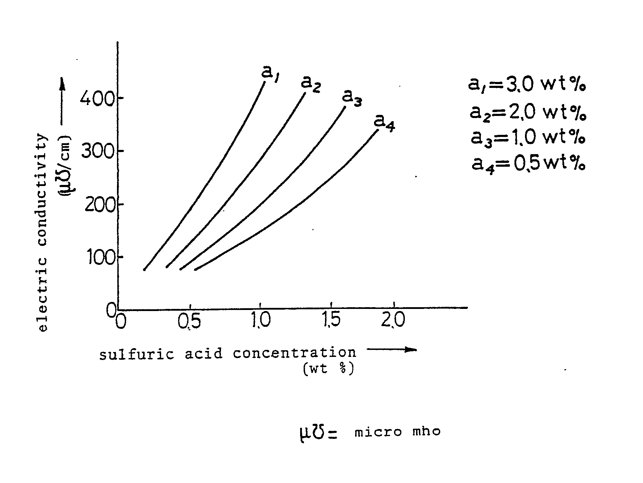

### Brief Description of the Drawing

The drawing is a graph showing the correlation between the concentration of sulfuric acid and the electric conductivity in relation to the water content in samples.

### Best Modes of Carrying Out the Invention

The measuring system according to this invention comprises a water content measuring system and an electric conductivity measuring system.

As the water content measuring system, any system which is suitable for the property of a sample may be selected from available chemical, optical or electrical measuring methods. All of these systems are modified in practice to obtain quick results, continuous measurements or recordings so that they can be used in online process control systems in industrial plants. For example, in the method of optically measuring water content by utilizing the principle that the energy of a predetermined discontinuous wavelength which is generated in the near-infrared region is absorbed by the water, an infrared spectrum transmitted through a thin layer of water presents four absorption bands, i.e., 1.2 µm, 1.45 µm, 1.93 µm and 2.95 µm. The water content in various substances can, therefore, be determined with high precision by conducting the transmission or reflection suitable for a sample at any of the above wavelengths.

The values obtained by chemical, optical or electrical measurement are converted into electrical signals, recorded in a form suitable for the purpose, or transmitted to a control system. In this invention, it is preferable to transmit the values as signals to a measuring system for electric conductivity which has a memory for the correlation between the acid concentration and the electric conductivity in relation to the water content.

An explanation will now be given of the measurement system for electric conductivity according to this invention. The concentration and the electric conductivity of a solution generally have a correlation under predetermined conditions. In the present invention, using the above principle, the acid concentration is determined by obtaining the correlation between the electric conductivity and the concentration of acid in relation to various water contents, storing the calibration curve in a memory in advance, and measuring the electric conductivity. As the electric conductivity of a solution varies by temperature, it is desirable to maintain the temperature of a sample solution constant or minimize its variation and to conduct temperature compensation operations.

The method according to this invention can be incorporated in an online process control system for industrial plants and can achieve process control of acid effectively since it can determine the concentration of acid with high precision in a short time by measuring the water content and the electric conductivity, and since the operator is free from the danger of directly contacting acids that is often encountered in titration or other methods.

An example of the present invention is shown below.

### Example

Sulfuric acid is used as a catalyst in a reaction to obtain phenol and acetone by decomposing cumene hydroperoxide. The concentration of sulfuric acid should be strictly controlled in order to prevent side reactions and improve yield.

A sample was taken out of a reactor to which cumene hydroperoxide, sulfuric acid and acetone which is used for removing the reaction heat and contains about 1% of water were continuously fed, to optically determine the water content of the sample by Pier optical water analyzer (manufactured by Nippon Yakin Kagaku Kogyo Co., Ltd.).

The correlation between the sulfuric acid concentration and the electric conductivity in relation to each water content was obtained in advance. The results are shown in the graph. In the graph, the symbols $a_1$, $a_2$, $a_3$ and $a_4$ indicate water content and the progression $a_1 > a_2 > a_3 > a_4$. The correlation was stored in advance in the memory of the control system which was programmed so that when the data concerning the water content and the electric conductivity were transmitted, the sulfuric acid concentration was calculated and at the same time signals were transmitted to the feeding system of the sulfuric acid concentration. As a result, the concentration of sulfuric acid was maintained precisely at a predetermined level and the time required for measurement was shorter than the titration method, thereby preventing side reactions and remarkably improving the yield of phenol.

### Claims

1. A method for controlling concentration of sulfuric acid, used as a catalyst in a reaction to obtain phenol and acetone by decomposing cumene hydroperoxide, which comprises the steps of: taking out a sample from the reaction mixture; precisely determining water content in the sample; measuring electric conductivity of the sample; obtaining the sulfuric acid concentration of the sample from the water content determination and electric conductivity measurement, using a correlation, obtained in advance, between sulfuric acid concentration and electric conductivity in relation to water content; and then transmitting the sulfuric acid concentration as a signal to a system for feeding sulfuric acid to the reaction, thereby maintaining the sulfuric acid concentration at a predetermined level.

2. A method as claimed in claim 1, wherein the water content determination and the electric conductivity measurement of the determining and the measuring steps respectively are stored in a memory system for obtaining said correlation between the sulfuric acid concentration and electric conductivity in relation to each water content, thereby determining the sulfuric acid concentration.

3. A method as claimed in claim 1 or 2, wherein the water content determination is conducted by an optically measuring method.

### Patentansprüche

1. Verfahren zur Steuerung der Konzentration von Schwefelsäure, die als Katalysator bei einer Reaktion zur Herstellung von Phenol und Aceton durch Zerlegen von Cumolhydroperoxyd verwendet wird, gekennzeichnet durch die Verwendung der nachfolgenden Verfahrensschritte:

Entnahme einer Probe aus der Reaktionsmischung;

präzise Bestimmung des Wasserinhalts der Probe;

Messen der elektrischen Leitfähigkeit der Probe;

Ermittlung der Schwefelsäurekonzentration der Probe aus der Wasserinhaltsbestimmung und elektrischen Leitfähigkeitsmessung, unter Verwendung einer vorher ermittelten Korrelation zwischen Schwefelsäurekonzentration und elektrischer Leitfähigkeit in Beziehung zum Wasserinhalt;

und schließlich Übertragung der Schwefelsäurekonzentration als ein Signal auf ein System zur Zuführung der Schwefelsäure zur Reaktion, wobei die Schwefelsäurekonzentration auf einer vorbestimmten Höhe gehalten wird.

2. Verfahren nach Anspruch 1, dadurch gekennzeichnet, daß die Wasserinhaltsbestimmung und die elektrische Leitfähigkeitsmessung der Bestimmungs- und Meßschritte entsprechend in einem Speicher zur Erzielung der Korrelation zwischen der Schwefelsäurekonzentration und elektrischen Leitfähigkeit in Beziehung zum Wasserinhalt gespeichert werden, wodurch die Schwefelsäurekonzentration bestimmt wird.

3. Verfahren nach Anspruch 1 oder 2, dadurch gekennzeichnet, daß die Wasserinhaltsbestimmung durch eine optische Meßmethode erfolgt.

### Revendications

1. Un procédé pour la régulation de la concentration de l'acide sulfurique utilisé comme catalyseur dans une réaction pour obtenir un phénol et de l'acétone par décomposition de l'hydroperoxyde de cumène qui comprend les stades de: prélèvement d'un échantillon du mélange réactionnel; détermination précise de la teneur en eau de l'échantillon; mesure de la conductivité électrique de l'échantillon; obtention de la concentration de l'acide sulfurique de l'échantillon à partir de la détermination de la teneur en eau et de la mesure de la conductivité électrique, par emploi d'une corrélation obtenue au préalable entre la concentration de l'acide sulfurique et la conductivité électrique en relation avec la teneur en eau; puis transmission de la concentration de l'acide sulfurique comme signal à un système d'alimentation de la réaction en acide sulfurique afin de maintenir la concentration de l'acide sulfurique à un taux prédéterminé.

2. Un procédé comme revendiqué dans la revendication 1 dans lequel la détermination de la teneur en eau et la mesure de la conductivité électrique respectivement du stade de détermination et de mesure sont stockées dans un système de mémoire pour obtenir ladite corrélation entre la concentration de l'acide sulfurique et la conductivité électrique en relation avec chaque teneur en eau, afin de déterminer la concentration de l'acide sulfurique.

3. Un procédé comme revendiqué dans la revendication 1 ou 2 dans lequel la détermination de la teneur en eau est effectuée selon un procédé de mesure optique.